# EUROPÄISCHE PATENTSCHRIFT

(11) **EP 2 528 711 B1**
(45) Veröffentlichungstag und Bekanntmachung des Hinweises auf die Patenterteilung: **15.11.2017**
(21) Anmeldenummer: 11701446.4
(22) Anmeldetag: 17.01.2011
(51) Int. Cl.: B23P 15/40, C21D 9/22, B21D 37/20, B26F 1/44, C21D 1/26

(54) **STANZWERKZEUG**
PUNCHING TOOL
OUTIL DE POINÇONNAGE

(30) Priorität: 26.01.2010 AT 1012010
(43) Veröffentlichungstag der Anmeldung: 05.12.2012
(73) Patentinhaber: voestalpine Precision Strip GmbH, 3333 Böhlerwerk (AT)
(72) Erfinder: HAAS, Anton, A-3321 Ardagger (AT)
(74) Vertreter: Wildhack & Jellinek
(86) Internationale Anmeldenummer: PCT/AT2011/000026
(87) Internationale Veröffentlichungsnummer: WO 2011/091454

(56) Entgegenhaltungen:
- WO-A1-2009/121383
- DE-A1- 19 941 625
- DE-C1- 3 135 980
- US-A- 4 729 274

## Beschreibung

Die Erfindung betrifft ein Stanzwerkzeug, insbesondere eine Schneidlinie, gebildet aus einem thermisch behandelten und/oder thermisch vergüteten Stahlband, ausgeformt an den Schmalseiten mit einerseits einem Schneidteil mit einer Schneidkante und andererseits mit einem Rückenteil.

Stanzwerkzeuge, insbesondere Schneidlinien werden zum Teilen oder Perforieren von flächigen Materialien wie Papier, Karton, Kunststofffolien und dergleichen in Flachbett- und/oder Rotations-Stanzmaschinen eingesetzt.

Die Problematik einer gewünschten Schnittherstellung und einen Lösungsvorschlag offenbart die WO 2009/121 383. In diesem Dokument wird vorgeschlagen, am Rücken der Schneidline Vorsprünge vorzusehen, welche bei der ersten Verwendung des Werkzeuges plastisch verformbar sind und derart selbstständig einen gegebenenfalls erforderlichen, örtlichen oder bereichsweisen Höhenausgleich der Schneidlinien in der Trägerplatte zwischen der Stanz- und Oberplatte der Stanzmaschine, ein sogenanntes Zurichten des Werkzeuges, bewirken.

Die Vorsprünge am Rücken der Schneidlinie werden durch eine genaue spanabhebende Ausarbeitung der Zwischenräume beispielsweise durch Einschleifen, Einfräsen und dergleichen erstellt.

Weiters wird in obigem Dokument vorgeschlagen, im Rückenbereich der Schneidlinie eine Randentkohlung vorzusehen, um eine Erleichterung der plastischen Verformung der Vorsprünge bei einem automatischen Zurichten bei der ersten Verwendung zu erreichen.

*In der* DE 199 41 625 A1 *wird vorgeschlagen, eine Bruchgefahr eines Messereinsatzes zu vermindern, indem der Befestigungsabschnitt desselben nach einem Härten angelassen wird.*

DE 31 35 980 C1 *offenbart ein Bandstahlwerkzeug, dessen Breite des Messerückens bis zur Ausbildung einer Verformungszone verkleinert ist, wobei die Verformungsfestigkeit des Werkstoffes in diesem Bereich niedriger ist als im Bereich der Schneide.*

Berichten zufolge wurden versuchsweise am Rücken von Schneidlinien Erhebungen durch Aufbringen von Fremdmaterial erstellt, welche Erhebungen bei einer ersten Schnittbelastung durch Verformung eine Zurichtung des Werkzeuges bewirken sollen.

Oben genannte Maßnahmen und Ausbildungsformen der Rückenteile von

Schneidlinien können durchaus ein automatisches Zurichten derselben beim ersten Belastungsschnitt ermöglichen, haben jedoch den Nachteil einer aufwändigen Herstellung der Ausnehmungen in der Kontur und das Problem eines gezielt einstellbaren Verformungsweges, abhängig von einer örtlichen Belastung des Rückenteiles der Schneidlinie für eine das Werkzeug und die Platten schonende, automatische Zurichtung in der Stanzmaschine gemeinsam. Vom Betreiber von Stanzmaschinen wird weiters eine Erhöhung der Werkzeugstandzeit und eine Vermeidung von Dauerbrüchen der Schneidlinien gewünscht.

Die Erfindung setzt sich zum Ziel, ein wirtschaftlich herstellbares Stanzwerkzeug, insbesondere eine Schneidlinie, mit gegenüber dem Stand der Technik verbesserten Eigenschaften herzustellen, welches Werkzeug bei einer automatische Zurichtung günstige, die Platten der Stanzmaschine schonende Funktionen aufweist und im Dauer-Stanzbetrieb eine längere, fehlerfreie Einsatzzeit bzw. eine höhere Lebensdauer hat. Weiters soll die Qualität des Stanzgutes, der sog. Nutzen, durch einen sauberen Schnitt und reduzierte Haltepunkte, verbessert werden.

Dieses Ziel wird bei einem Stanzwerkzeug, insbesondere einer Schneidlinie, erreicht, wenn aus einem thermisch behandelten und/oder thermisch vergüteten Stahlband, ausgeformt an den Schmalseiten mit einerseits einem Schneidteil mit einer Schneidkante und andererseits mit einem Rückenteil mit im Querschnitt einer konvexen Kontur oder einer aus mehreren vorragenden Konvexbereichen bestehenden Kontur, welche Kontur stellenweise quer zur Längserstreckung und senkrecht zu den Seitenflächen spanlos durch Kaltformgebung bzw. Prägung mit freier Breitung des Materials geformte Vertiefungen aufweist, wobei das Ausmaß der Breitung geringer ist als die Stahlbanddicke und die unverformten Bereiche zwischen den Vertiefungen bei einer Inbetriebnahme des Werkzeuges plastisch verformbar sind.

Erreicht kann dieses Ziel auch bei einem Stanzwerkzeug, insbesondere einer Schneidlinie, werden, wenn das Rückenteil zumindest an einer Seitenfläche des Stahlbandes mit einem Winkel zu dieser normal zur Längserstreckung spanlos durch Kaltformgebung mit freier Breitung des Materials stellenweise geformte Vertiefungen sowie dadurch gebildete Erhebungen über die Kontur des Rückenteiles aufweist, wobei die in Gegenrichtung zum Schneidbereich vorragenden Erhebungen bzw. Bereiche bei einer Inbetriebnahme des Werkzeuges plastisch verformbar sind. Die mit der Erfindung erreichten Vorteile sind im Wesentlichen darin zu sehen, dass einerseits mit einer spanlosen Kaltformgebung im stirnseitigen Bereich des Rückenteiles des Werkzeuges bzw. der Schneidlinie wirtschaftlich Vertiefungen eingebracht oder Erhebungen gebildet werden können, andererseits kann derart erfindungsgemäß ein erforderlich unterschiedlicher Kraftanstieg in Abhängigkeit vom Weg bei der plastischen Verformung der unverformten Bereiche oder der durch Verformung vorragenden Erhebungen am Rückenteil von Schneidlinien zur Schneidkante hin gemäß den Erfordernissen der jeweiligen Stanzmaschinen bei einer automatischen Zurichtung des Werkzeuges angepasst werden. Dies ist von großer Bedeutung, wenn eine Planparallelität der Platten der Flachbett- und/oder Rotations-Stanzmaschinen nicht in ausreichendem Maße vorliegt oder justierbar ist.

Von wesentlicher Bedeutung für eine Ausbildung der plastisch verformten Bereiche ist die Materialverfestigung in Abhängigkeit vom Verformungsweg bei einer automatischen Zurichtung des Werkzeuges. Weil die Vertiefungen zwischen den unverformten Bereichen des Rückenteiles der Schneidlinie bereits durch örtliche, plastische Formgebung mit einer Materialverfestigung erstellt wurden, werden vorteilhafte Kriterien für das Zurichten der Schneidlinie bei Inbetriebnahme des Werkzeuges erreicht. Mit anderen Worten: der örtliche Gradient des Anstieges der Kraft auf die Schneidkante kann bei einer automatischen Zurichtung der Schneidlinie nach den Erfordernissen der Flachbett- und/oder Rotations-Stanzmaschinen durch eine Prägung von Vertiefungen im Rückenteil mit freier Breitung eingestellt werden.

Erfindungsgemäß ist zur Vermeidung einer übermäßigen Randaufstauchung des Materials bei engen Biegeradien der Schneidlinie vorgesehen, dass das Ausmaß der Breitung bei der Einbringung der Vertiefungen durch Kaltverformung geringer ist als die Stahlbanddicke. Dies wird durch eine Ausbildung der konvexen Kontur vom Rückenteil der Schneidlinie erreicht, wobei die stellenweise über die ursprüngliche Kontur vorragenden Bereiche des aufgestauchten Materials eine Dicke von 60% bis 85% der Dicke der Schneidlinie aufweisen. Derart sind einerseits günstige Voraussetzungen für ein automatisches Zurichten der Schneidlinie in betrieblich dauerbeanspruchten Stanzmaschinen zu erreichen, andererseits auch enge Radien bei einer insbesondere maschinellen Biegung der Schneidlinie bei der Herstellung von Werkzeugen vorteilhaft erreichbar.

Bei Langzeit-Belastungs-Versuchen wurde gefunden, dass gestauchte Zonen Druckrestspannungen im Verformungsbereich des Rückenteiles von Schneidlinien bewirken, welche bei wechselnden und/oder schwellenden, mechanischen Beanspruchungen eine Rissbildung oder einen Dauerbruch verhindern.

Werden hingegen Ausnehmungen mit Spanriefen in Blattquerrichtung gefertigt, so können diese Spanriefen als Rissinitiationsstellen bei einer Dauerbelastung wirken und zum frühzeitigen Werkzeugbruch führen.

Wenn, wie in günstiger Weise vorgesehen sein kann, die senkrechten Vertiefungen in der Kontur ein Ausmaß von 5 µm bis 80 µm, vorzugsweise von 20 µm bis 50 µm, aufweisen, ist aufgrund der erreichten Verfestigungen im Verformungsbereich des Rückenteiles ein besonders vorteilhaftes Zurichten der Schneidlinien mit einem maßgeregelten Stauchen der unverformten Bereiche bis zu den verfestigten Zonen erreichbar.

Ein wesentlicher Vorteil bei einem automatischen Zonenzurichten von Schneidlinien in einem Werkzeug ist erreichbar, wenn die Längserstreckung der geformten Vertiefung zur Längserstreckung des unverformten Bereiches im Rückenteil einen Wert von 1.0 bis 4.9, vorzugsweise von 1.5 bis 3.0, ergibt.

Weites kann in günstiger Weise für ein Zonenzurichten der Abstand in der Folge zwischen zwei Vertiefungen bzw. zwei unverformten Bereichen ein Maß von 0.1 mm bis 0.95 mm, vorzugsweise von 0.35 mm bis 0.65 mm, betragen.

Nach einer besonderen Ausführungsform einer erfindungsgemäßen Schneidlinie kann vorgesehen sein, dass die konvexe Kontur des Rückenteiles im Querschnitt durch einen oder mehrere gerundete(n) oder polygonale(n) Bereich(e) gebildet ist. Derart können eine hohe, seitliche Stabilität und eine erleichterte Zurichtung des Werkzeuges erreicht werden.

Nach einer besonderen Ausgestaltung der Erfindung können, wie vorher dargelegt, örtliche Erhebungen über die Kontur des Rückenteiles von Schneidlinien auch durch Kaltformgebung bei freier Breitung des Materials mittels stellenweise senkrecht zur Längserstreckung ausgeformten Vertiefungen in die Seitenfläche(n) des Stahlbandes mit einem spitzen Winkel zu dieser (diesen) erstellt werden. Diese im Wesentlichen seitliche, spanlose Kaltformgebung erbringt durch den Materialfluss vorragende Erhebungen in der Kontur, wobei auch bei derart erstellten Erhebungen im Rückenteil bei Belastungen Druckspannungen verbleiben, welche die Bildung von Dauerbrüchen weitestgehend ausschalten.

Ein Stanzwerkzeug mit seitlichen Prägungen kann besonders bevorzugt sein, wenn die Erhebungen über die Kontur des Rückenteiles, gebildet durch Verformung der Seitenteile mit einem Winkel zueinander, ein Ausmaß von 20 µm bis 90 µm betragen und mit einer Länge von 0.1 mm bis 0.95 mm beabstandet sind.

Nach einer vorteilhaften Ausführungsform eines Stanzwerkzeuges, insbesondere von Schneidlinien gemäß der Erfindung, besteht der Bandkörper aus niedrig legiertem Stahl mit einer Innenzone, welche einen Kohlenstoffgehalt zwischen etwa 0.3 Gew.-% bis etwa 0.95 Gew.-% und eine Gefügestruktur, erreicht durch eine Umwandlung bei einer Vergütung im vorzugsweise unteren Bainitbereich, sowie eine Härte von 280 HV bis 480 HV aufweist und bevorzugt an den Seitenflächen eine Randentkohlungszone mit einer Tiefe von 0.01 mm bis 0.05 mm, vorzugsweise von 0.02 mm bis 0.04 mm, hat.

Wenn, wie weiters vorgesehen sein kann, die unverformten Bereiche oder die Erhebungen am Rückenteil des Stanzwerkzeuges, insbesondere der Schneidlinie, bis zu einer Tiefe von höchstens 95 µm ein bei einer Temperatur zwischen 300°C und der Austenitbildungstemperatur des Werkstoffes gebildetes Anlassgefüge aufweisen, werden besonders günstige Eigenschaften des Werkstoffes für ein automatisches Zurichten erreicht.

Ausarbeitungen haben ergeben, dass im unteren Temperaturbereich der Bainithärtung ein Umklappen des kubisch-flächenzentrierten Gitters der Stahllegierung in ein kubisch-raumzentriertes Atomgitter mit kleinsten Karbiden erfolgt, wobei hohe Materialhärten erzielt werden. Ab einer Temperatur von 300°C bei einer Anlasserwärmung tritt ein Härteabfall ein, der durch ein Einformen der Karbide zu größeren Komplexen begründet ist. Bei höheren Anlasstemperaturen kann trotz höherer Ausgangshärte die Anlasshärte von Bainit unter diejenige des Perlits sinken, wodurch besonders vorteilhaft niedrige Materialhärtewerte der unverformten Bereiche oder der Erhebungen am Rückenteil einer Schneidlinie erzielt werden können.

Ein oberflächliches Anlassen des eine Bainitstruktur aufweisenden Rückenteiles kann auch vor einer stellenweisen Prägung im Konturbereich erfolgen.

Weil nun bei einer Bearbeitung durch stellenweises Prägen der Kontur am Rückenteil einer Schneidlinie eine Kraft in Richtung zur Schneidkante hin gebildet werden kann, ist es aus abmessungstechnischen Gründen günstig, wenn der Schneidenbereich mit einer Härte von größer 52 HRC bzw. 550 HV bis 61 HRC bzw. 720 HV und einer gerundeten Schneidkante mit einem Radius zwischen 0.004 mm und 0.05 mm gebildet ist und als Anschlagmaß bei einem Prägen der Kontur wirkt. Gleiches gilt für einen Schneidenwinkel von 50° bis 100° mit oder ohne Schneidengeometrien mit Primär- und Sekundärfacetten.

Den tribologischen Eigenschaften des Stanz- oder Perforiergutes am Werkzeug entsprechend kann die Oberfläche des Schneidteiles im Schneidkantenbereich der Schneidlinie eine geschabte, eine geschliffene und/oder eine beschichtete Ausführungsform aufweisen.

Ein Herstellverfahren für ein Stanzwerkzeug, insbesondere für eine Schneidlinie der eingangs genannten Art, anzugeben, bei welchem vorerst aus einem flachen Vormaterial ein bandförmiges Rohteil mit einer bainitischen Gefügestruktur und vorzugsweise mit entkohlter Randzone hergestellt wird, wird gemäß einem weiteren Ziel der Erfindung im Wesentlichen dadurch erreicht, dass in einem ersten Schritt an den Schmalseiten des Rohteiles bzw. Rohbandes durch spanende Bearbeitung einerseits ein Rückenteil mit einer konvexen Kontur und andererseits ein konisches Schneidteil ausgeformt werden, worauf in einem zweiten Schritt bei im Wesentlichen Raumtemperatur quer zur Längserstreckung und senkrecht zu den Seitenflächen des Bandes über dessen Länge in die konvexe Kontur des Rückenteiles durch spanlose Formgebung bei freier Breitung des Materials stellenweise Vertiefungen eingebracht werden und die unverformten Bereiche des Rückenteiles als die das gewünschte Breitenmaß des Werkzeuges bzw. der Schneidlinie gebenden Elemente bei einer Schneidkantenherstellung verwendet werden.

Die mit dem Verfahren nach der Erfindung erzielten Vorteile sind im Wesentlichen darin zu sehen, dass ein gezieltes Vorrichten des Rückenteiles mit einer nachfolgenden, spanlosen Einbringung von Vertiefungen in die konvexe Kontur durch Prägen einerseits eine wirtschaftliche Herstellung und andererseits ein gewünschtes Eigenschaftsprofil der unverformten Bereiche für ein Stauchen im Rahmen eines automatischen Zurichtens bei einer Inbetriebnahme des Werkzeuges erbringen.

Ein Vorrichten des Rückenteiles bzw. eine Ausformung einer konvexen Kontur durch eine spanabhebende Bearbeitung muss dabei auf die spanlose Kaltverformung bzw. Prägung abgestimmt sein, so dass bei einer freien Breitung des Materials die Fließbereiche ein geringeres Quermaß als der Schneidlinie direkt entspricht aufweisen.

Bei einer Prägung selbst verfestigt sich örtlich der Werkstoff in Abhängigkeit von dem Ausmaß der Verformung und dem Gefüge. Eine erforderlich örtliche oder bereichsweise Breitenänderung einer Schneidlinie bei einer automatischen Zurichtung derselben durch Stauchung von Bereichen am Rückenteil bei einer ersten Stanzbelastung kann nach der Erfindung durch eine Konfiguration und eine örtliche Materialverfestigung der Kaltumformbereiche gezielt eingestellt werden. Derart wird nicht nur ein wirtschaftliches Herstellverfahren für eine Schneidlinie erreicht, sondern es können auch deren Zurichtungsbedingungen bei einer ersten Stanzbelastung optimiert werden.

Eine weitere Ausführungsform eines Herstellverfahrens für ein Stanzwerkzeug, insbesondere für eine Stanzlinie mit hoher Wirtschaftlichkeit und besten Eigenschaften bei einer automatischen Zurichtung in einer Flachbett- und/oder Rotations-Stanzeinrichtung kann gemäß der Erfindung geschaffen werden, wenn im vorstehenden Verfahren in einem zweiten Schritt bei im Wesentlichen Raumtemperatur zumindest an einer Seitenfläche im Bereich des Rückenteiles mit einem Winkel zu dieser normal zur Längserstreckung des Bandes durch spanlose Formgebung bei freier Breitung des Materials Vertiefungen eingebracht und derart Erhebungen über die Kontur des Rückenteiles gebildet werden und die in Gegenrichtung zum Schneidbereich vorragenden Erhebungen als die das Breitenmaß des Werkzeuges bzw. der Schneidlinie gebenden Elemente bei einer Schneidkantenherstellung verwendet werden.

Mit einem derartigen Verfahren, bei welchem eine freie Breitung bzw. ein Fließen des Materials beim stellenweisen Prägen der Seitenflächen über den Konturbereich des Rückenteiles erfolgt und Erhebungen bildet, kann eine Biegung der Schneidlinie mit engen Radien erfolgen, ohne dass eine Überhöhung der Seitenfläche im Bereich des Rückenteiles gebildet wird.

Für eine Einstellung günstiger Materialeigenschaften für eine Verformung von Teilen des Rückenbereiches bei einer automatischen Zurichtung kann von Vorteil sein, wenn bei einer Gefügestruktur von unterem Bainit im Band vor oder nach dem ersten Schritt und/oder nach dem zweiten Schritt des Herstellungsablaufes die unverformt belassenen oder die über die Kontur vorragenden Bereiche bzw. Erhebungen bis zu einer Tiefe derselben von höchstens 95 µm bei einer Temperatur zwischen 300°C und der Austenittemperatur der Legierung angelassen werden. Ein derartiges Anlassen einer unteren Bainitstruktur führt zu einem Einformen der feinen Karbide und in der Folge zu einer wesentlichen Abnahme der Festigkeit und Erhöhung der Fließfähigkeit des Werkstoffes. Für eine plastische Verformung in einem gewünschten Ausmaß von unverformten Bereichen oder vorragend aufgestauchten Bereichen an der Kontur des Rückenteiles des Werkzeuges kann eine Gefügestruktur an angelassenem Bainit wesentliche Vorteile bei einem automatischen Zurichten des Werkzeuges erbringen.

Die Erfindung soll mit Ausführungsbeispielen, welche jeweils nur einen Ausführungsweg darstellen, näher erläutert und an Hand von Zeichnungen nachfolgend beschrieben werden.

Die Zeichnungen zeigen schematisch:
- Fig. 1: eine Schneidlinie im Querschnitt
- Fig.1a: eine Konvex-Kontur eines Rückenteiles im Querschnitt
- Fig. 2: ein plastisch geformtes Rückenteil im Querschnitt
- Fig. 2a: ein plastisch geformtes Rückenteil in Ansicht
- Fig. 3: einen mit freier Breitung verformten Konvexbereich eines Rückenteiles im Querschnitt
- Fig. 3a: den Konvexbereich von Fig. 3 in Ansicht
- Fig. 4: ein Prägewerkzeug
- Fig. 5: eine Ansicht von spanend ausgeformten Vertiefungen im Rückenteil
- Fig. 6: eine Ansicht von spanlos durch Prägung ausgeformten Vertiefungen im Rückenteil
- Fig. 6a/b: eine örtliche Vergrößerung der Fig. 6 und eine Höhenlinie über die Vertiefungen im Rückenteil
- Fig. 7: eine Kontur eines Rückenteiles mit an den Seitenflächen der Schneidlinie stellenweise, spanlos geformten Vertiefungen im Querschnitt
- Fig. 7a: Rückenteil gemäß Fig. 7 in Ansicht

Eine Bezugszeichenliste soll die Zuordnung der Funktionsbereiche und Teile des Werkzeuges in den Darstellungen erleichtern.

Es stellen dar:
- 1: Schneidlinie
- 2: Rückenteil
- 21: Konvexbereiche
- 22: gebreitetes Material
- 23: Erhebung
- 3: Schneidteil
- 31: Schneidkante
- 311: Schneidkantenradius
- 4: Prägevertiefung
- 5: Spanriefen
- 6: Schaberiefen
- B: frei gebreitete Kontur
- D: Breite der Schneidlinie
- P,P₁,P₂: Formungskraft
- a: Länge des vorragenden Bereiches
- b: Länge der Vertiefung

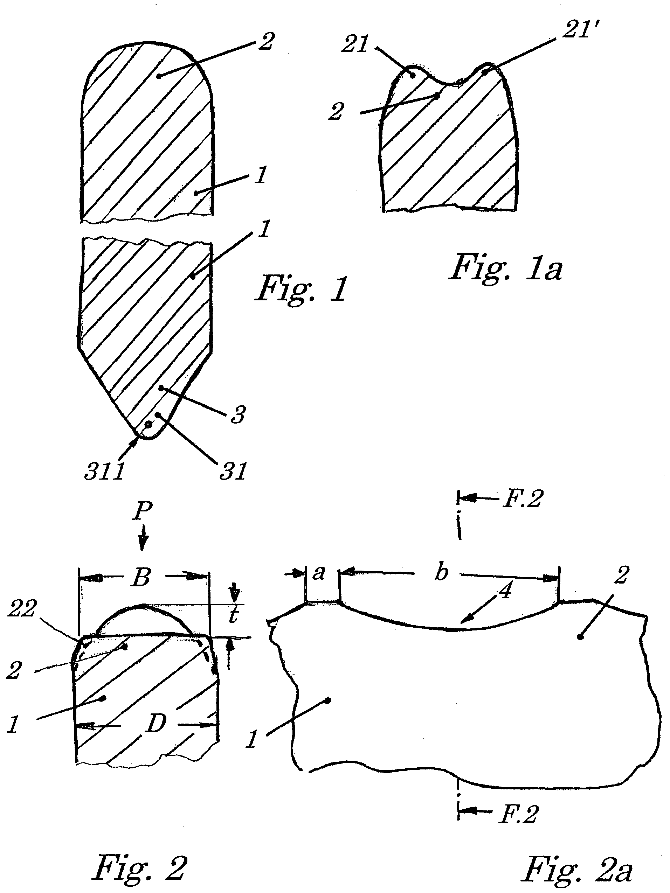

Fig. 1 zeigt schematisch im Querschnitt eine Schneidlinie1 mit einem konvex ausgeformten Rückenteil 2 und gegenüberliegend ein Schneidteil 3 mit einer Schneide 31, welche einen Radius 311 aufweist.

Fig. 1 a zeigt im Querschnitt ein Rückenteil 2 einer Schneidlinie mit zwei konvex vorragenden Bereichen 21, 21'.

In Fig. 2 ist ein verformtes Rückenteil 2 mit freier Breitung 22 des Materials bei einer Formung durch ein Werkzeug mit einer Formkraftrichtung P im Querschnitt (Fig. 2) von Fig. 2a dargestellt. Bei einer Dicke D der Schneidlinie 1 bildet sich bei einer Eindrucktiefe t durch plastische Materialverdrängung 22 eine vergrößerte Breite B im konvexen Rückenteil 2 aus, welche jedoch ein geringeres Ausmaß als die Liniendicke D aufweist.

Fig. 2a zeigt in Ansicht eine Schneidlinie 1 mit einer plastischen Prägevertiefung 4 im konvexen Bereich am Rückenteil 2. Das unverformte Rückenteil 2 weist eine Länge a, der plastisch verformte Bereich eine solche mit einer Bezeichnung b auf.

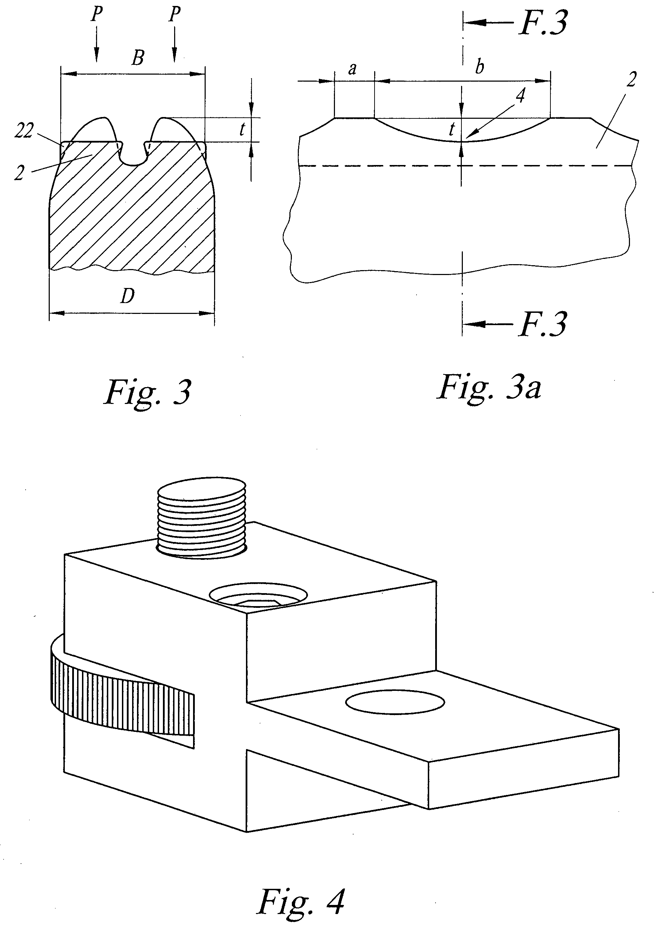

Fig. 3 und Fig. 3a zeigen im Wesentlichen gleiche Darstellungen wie in Fig. 2 und Fig. 2a, jedoch umfasst das Rückenteil 2 zwei durch Schaben erstellte Konturbereiche mit freier Materialbreitung 22 und eine Gesamtbreite B.

In Fig. 4 ist ein Werkzeug bzw. Prägerad zur senkrechten Verformung für ein Rückenteil (2) einer Schneidlinie 1 dargestellt.

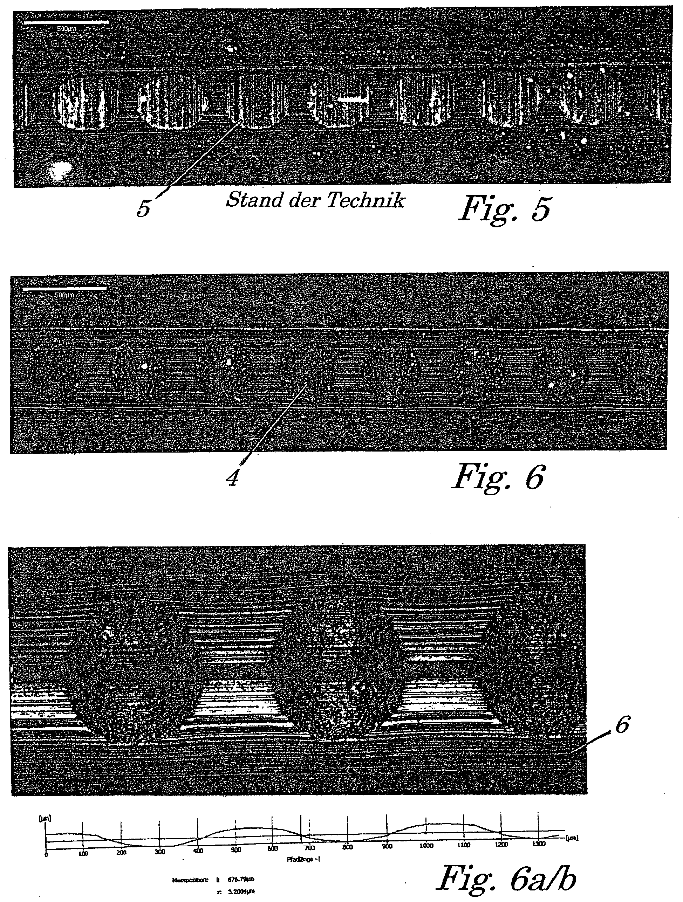

Aus Fig. 5 sind in Ansicht nach dem Stand der Technik in ein Werkzeug bzw. in ein Rückenteil 2 einer Schneidlinie 1 eingeschliffene Vertiefungen ersichtlich, wobei die Schleifriefen 5 in Dickenrichtung der Schneidlinie 1 verlaufen.

Fig. 6 zeigt Prägevertiefungen gemäß der Erfindung im Rückenteil 2 einer Schneidlinie 1.

Fig. 6a zeigt die Prägevertiefungen 4 in vergrößerter Form. Die Schaberiefen 6 sind in verringerter Form noch in der Oberfläche der Prägeriefen 4 festzustellen. Außerhalb der Vertiefungen vermitteln die Schaberiefen in ihrer Längserstreckung durch die Wellenform bzw. Ausbuchtungen im Bereich der Prägevertiefungen 4 den Materialfluss bei einer freien Breitung.

In Fig. 6b ist ein gemessener Höhenverlauf im zentrischen Konvexbereich 21 des Rückenteiles 2 einer Schneidlinie 1 gezeigt.

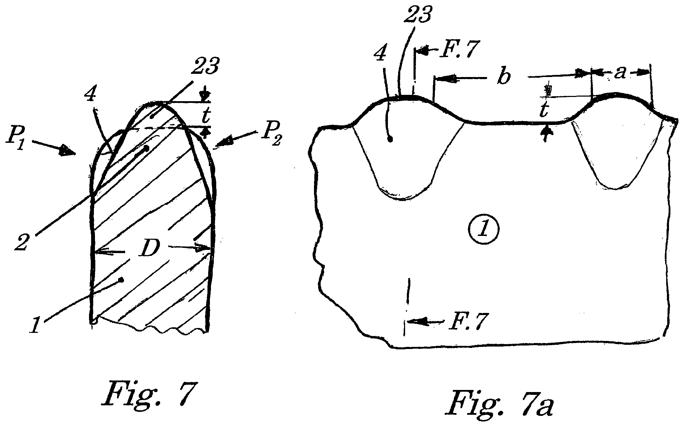

Fig. 7 und Fig. 7a zeigen im Querschnitt (Fig. 7) und in Ansicht ein Rückenteil 2 mit Prägevertiefungen 4 an den Seitenflächen einer Schneidlinie 1. Durch die Prägevertiefungen 4 in den Seitenflächen einer Schneidlinie 1 mit einem Winkel zur Seitenfläche 1, welche durch Werkzeuge mit einer Kraftrichtung P₁ und P₂ erfolgten, werden Erhebungen 23 mit einer Höhe von t in einer Länge a durch den Materialfluss bei einer freien Breitung gebildet. Ein Abstand b der Erhebungen 23 voneinander wird durch die Werkzeugform bestimmt.

## Patentansprüche

1. Stanzwerkzeug (1), insbesondere Schneidlinie (1), gebildet aus einem zumindest teilweise thermisch behandelten und/oder thermisch vergüteten Stahlband, ausgeformt an den Schmalseiten mit einerseits einem Schneidteil (3) mit einer Schneidkante (31) und andererseits mit einem Rückenteil (2) mit einer im Querschnitt konvexen Kontur oder einer aus mehreren vorragenden Konvexbereichen (21,21') bestehenden Kontur, ***dadurch gekennzeichnet, dass** die* Kontur stellenweise quer zur Längserstreckung und senkrecht zu den Seitenflächen spanlos durch Kaltformgebung bzw. Prägung mit freier Breitung des Materials geformte Vertiefungen (4) aufweist, wobei das Ausmaß der Breitung (B) geringer ist als die Stahlbanddicke (D) und die unverformten Bereiche (a) zwischen den Vertiefungen bei einer Inbetriebnahme des Werkzeuges plastisch verformbar sind.

2. Stanzwerkzeug (1), *nach Anspruch 1, **dadurch gekennzeichnet, dass** das* Rückenteil (2) zumindest an einer Seitenfläche des Stahlbandes mit einem Winkel zu dieser normal zur Längserstreckung spanlos durch Kaltformgebung mit freier Breitung des Materials stellenweise geformte Vertiefungen (4) sowie dadurch gebildeten Erhebungen (23) über die Kontur des Rückenteiles aufweist, wobei die in Gegenrichtung zum Schneidbereich vorragenden Erhebungen (23) bzw. Bereiche bei einer Inbetriebnahme des Werkzeuges plastisch verformbar sind.

3. Stanzwerkzeug (1) nach Anspruch 1, ***dadurch gekennzeichnet, dass*** am Rückenteil (2) die Vertiefungen (4) in der Kontur ein Ausmaß (t) von 5 bis 80 µm, vorzugsweise von 20 bis 50 µm, aufweisen.

4. Stanzwerkzeug (1) nach Anspruch 1 oder 3, ***dadurch gekennzeichnet, dass*** die Längserstreckung (b) der geformten Vertiefung (4) zur Längserstreckung (a) des unverformten
Bereiches am Rückenteil (2) einen Wert von 1.0 bis 4.9, vorzugsweise von 1.5 bis 3.0, ergibt.

5. Stanzwerkzeug (1) nach einem der Ansprüche 1 sowie 3 oder 4, ***dadurch gekennzeichnet, dass*** am Rückenteil (2) der Abstand in der Folge zwischen zwei Vertiefungen (4) bzw. zwei unverformten Bereichen (a) ein Maß vom 0.1 bis 0.95 mm, vorzugsweise von 0.35 bis 0.65 mm, beträgt.

6. Stanzwerkzeug (1) nach einem der Ansprüche 1 sowie 3 bis 5, ***dadurch gekennzeichnet, dass*** die konvexe Kontur des Rückenteiles (2) im Querschnitt durch einen oder mehrere gerundete oder polygonale Bereich(e) in Längsrichtung gebildet ist.

7. Stanzwerkzeug (1) nach Anspruch 2, ***dadurch gekennzeichnet, dass*** die Erhebungen über die Kontur des Rückenteiles, gebildet durch Verformung der Seitenfläche(n) mit einem Winkel zueinander, ein Ausmaß von 20 bis 90 µm betragen und mit einer Länge von 0.1 bis 0.95 mm beabstandet sind.

8. Stanzwerkzeug (1), insbesondere Schneidlinie (1), nach einem der Ansprüche 1 bis 7, bestehend aus einem Bandkörper aus niedrig legiertem Stahl mit einer Innenzone, welche einen Kohlenstoffgehalt zwischen etwa 0.3 bis etwa 0.95 Gew.-% *aufweiset, **dadurch gekennzeichnet, dass** die* Gefügestruktur, erreicht durch eine Umwandlung im vorzugsweise unteren Bainitbereich, sowie eine Härte von 280 bis 480 HV *hat* und bevorzugt an den Seitenflächen eine *an sich bekannte* Randentkohlungszone mit einer Tiefe von 0.01 bis 0.05 mm, vorzugsweise von 0.02 bis 0.04 mm, hat, wobei die unverformten Bereiche (a) oder die Erhebungen (23) am Rückenteil (2) des Stanzwerkzeuges, insbesondere der Schneidlinie (1), bis zu einer Tiefe von höchstens 95 µm ein bei einer Temperatur zwischen 300°C und der Austenitbildungstemperatur des Werkstoffes gebildetes Anlassgefüge aufweisen.

9. Stanzwerkzeug (1), insbesondere Schneidlinie (1), nach den Ansprüchen 1 bis 8, ***dadurch gekennzeichnet, dass** der* Schneidbereich (3) *eine* Härte von größer 52 HRC bzw. 550 HV *aufweist* und einer gerundeten Schneidkante (31) mit einem Radius (311) zwischen 0.004 und 0.05 mm *gebildet ist.*

10. Stanzwerkzeug (1), insb. Schneidlinie (1) nach Anspruch 9, ***dadurch gekennzeichnet, dass*** die Schneidkante einen Schneidenflächenwinkel von 50 bis 100° aufweist und dass wahlweise zumindest eine Seitenfläche zur Schneidkante (3) hin mit einer Primär- und einer Sekundärfacette ausgeführt ist.

11. Herstellverfahren für ein Stanzwerkzeug (1), insbesondere für eine Schneidlinie (1), gebildet aus einem zumindest teilweise thermisch behandelten und/oder thermisch vergüteten Stahlband, ausgeformt an den Schmalseiten mit einerseits einem Schneidteil (3) mit einer Schneidkante (31) und andererseits mit einem Rückenteil (2) mit im Querschnitt einer konvexen Kontur oder einer aus mehreren vorragenden Konvexbereichen (21, 21') bestehenden Kontur, ***dadurch gekennzeichnet, dass*** aus einem flachen Vormaterial ein bandförmiges Rohteil mit einer bainitischen Gefügestruktur und vorzugsweise mit *einer an sich bekannten* entkohlter Randzone hergestellt wird, wonach in einem ersten Schritt an den Schmalseiten des Rohteiles bzw. Rohbandes durch spanende Bearbeitung einerseits ein Rückenteil (2) mit einer konvexen Kontur und andererseits ein konisches Schneidteil ausgeformt werden, worauf in einem zweiten Schritt bei im Wesentlichen Raumtemperatur quer zur Längserstreckung und senkrecht zu den Seitenflächen des Bandes über dessen Länge in die konvexe Kontur des Rückenteiles durch spanlose Formgebung bei freier Breitung des Materials stellenweise Vertiefungen (4) eingebracht werden und die unverformten Bereiche des Rückenteiles (2) als die das gewünschte Breitenmaß des Werkzeuges bzw. der Schneidlinie gebenden Elemente bei einer Schneidkantenherstellung (31) verwendet werden.

12. Herstellverfahren *nach Anspruch 11, **dadurch gekennzeichnet, dass*** aus einem flachen Vormaterial ein bandförmiges Rohteil mit einer bainitischen Gefügestruktur und vorzugsweise mit *einer an sich bekannten* entkohlter Randzone hergestellt wird, wonach in einem ersten Schritt an den Schmalseiten des Rohteiles bzw. Rohbandes durch spanende Bearbeitung einerseits ein Rückenteil (2) vorzugsweise mit einer konvexen Kontur und andererseits ein konisches Schneidteil (3) ausgeformt werden, worauf in einem zweiten Schritt bei im Wesentlichen Raumtemperatur zumindest an einer Seitenfläche im Bereich des Rückenteiles mit einem Winkel zu dieser normal zur Längserstreckung des Bandes durch spanlose Formgebung bei freier Breitung des Materials Vertiefungen (4) eingebracht und derart Erhebungen (23) über die Kontur des Rückenteiles (2) gebildet werden und die in Gegenrichtung zum Schneidbereich (3) vorragenden Erhebungen (23) als die das Breitenmaß des Werkzeuges bzw. der Schneidlinie (1) gebenden Elemente bei einer Schneidkantenherstellung verwendet werden.

13. Herstellverfahren *nach Anspruch 11 oder 12, **dadurch gekennzeichnet, dass*** in einem zweiten Schritt in die Kontur des Rückenteiles (2) spanlos stellenweise Vertiefungen eingebracht und unverformte Bereiche belassen oder vorragende Erhebungen (23) gebildet werden, wobei in einem Zwischenschritt und/oder Folgeschritt die unverformt belassenen oder die über die Kontur (a) vorragenden Bereiche bzw. Erhebungen (23) bis zu einer Tiefe derselben von höchstens 95 µm bei einer Temperatur zwischen 300°C und der Austenitbildungstemperatur der Legierung angelassen werden.

## Claims

1. A punching tool (1), in particular a cutting line (1), formed from an at least partially thermally treated and/or heat-tempered steel strip, shaped on the narrow sides with a cutting part (3) on the one side, said cutting part comprising a cutting edge (31), and with a back part (2) on the other side, said back part comprising a convex contour in the cross-section or a contour consisting of a plurality of protruding convex regions (21, 21'), **characterised in that** the contour has depressions (4) formed in some areas transversally to the longitudinal extension and perpendicularly to the lateral surfaces with no chip formation by cold forming or stamping with free expansion of the material, wherein the degree of expansion (B) is less than the thickness (D) of the steel strip and the non-deformed regions (a) between the depressions can be plastically deformed during tool commissioning.

2. A punching tool (1), according to claim 1, **characterised in that** the back part (2) at least on one lateral surface of the steel strip at an angle to same that is normal to the longitudinal extension has depressions (4), formed by cold forming with no chip formation and with free expansion of the material in some areas, as well as elevations (23) formed as a result over the contour of the back part, wherein the elevations (23) or regions protruding in the opposite direction to the cutting region can be plastically deformed during tool commissioning.

3. A punching tool (1) according to claim 1, **characterised in that** on the back part (2) the depressions (4) in the contour have a dimension (t) of 5 to 80 µm, preferably of 20 to 50 µm.

4. A punching tool (1) according to claim 1 or 3, **characterised in that** the longitudinal extension (b) of the shaped depression (4) with respect to the longitudinal extension (a) of the non-deformed region on the back part (2) has a value of 1.0 to 4.9, preferably of 1.5 to 3.0.

5. A punching tool (1) according to one of claims 1 and 3 or 4, **characterised in that** on the back part (2) the spacing subsequently between two depressions (4) or two non-deformed regions (a) can have a size of 0.1 mm to 0.95 mm, preferably of 0.35 mm to 0.65 mm.

6. A punching tool (1) according to claims 1 and 3 to 5, **characterised in that** the convex contour of the back part (2) in cross-section can be formed by one or more rounded or polygonal region(s) in the longitudinal direction.

7. A punching tool (1) according to claim 2, **characterised in that** the elevations over the contour of the back part, formed by means of deformation of the lateral surface(s) at an angle to each other, have a dimension of 20 µm to 90 µm and are spaced with a length of 0.1 mm to 0.95 mm.

8. Punching tool (1), in particular cutting line (1), according to one of the claims 1 to 7, consisting of a strip body made of low-allow steel comprising an inner zone, which has a carbon content between 0.3 to about 0.95 wt.%, **characterised in that** the microstructure, achieved by a transformation in the preferably lower bainite region, and has a hardness of 280 to 480 HV and preferably on the lateral surfaces has an edge decarburisation zone known per se with a depth of 0.01 mm to 0.05 mm, preferably of 0.02 to 0.04 mm, wherein the non-deformed regions (a) or the elevations (23) on the back part (2) of the punching tool, in particular of the cutting line (1), down to a maximum depth of 95 µm have a tempered structure formed at a temperature between 300°C and the austenite formation temperature.

9. A punching tool (1), in particular cutting line (1), according to the claims 1 to 8, **characterised in that** the cutting region (3) has a hardness of more than 52 HRC or 550 HV and is formed with a rounded cutting edge (31) comprising a radius (311) between 0.004 and 0.05 mm.

10. A punching tool (1), in particular a cutting line (1), according to claim 9, **characterised in that** the cutting edge has a cutting surface angle of 50 to 100° and that optionally at least one lateral surface towards the cutting edge (3) is configured with a primary and a secondary facet.

11. A manufacturing method for a punching tool (1), in particular for a cutting line (1), formed from an at least partially thermally treated and/or heat-annealed steel strip, shaped on the narrow sides on the one side with a cutting part (3) that has a cutting edge (31) and on the other side with a back part (2) that in the cross-section has a convex contour or a contour consisting of one or more protruding convex regions (21, 21'), **characterised in that** from a planar precursor material a strip-like blank part comprising a bainite microstructure and preferably a decarburised edge zone known per se is produced, according to which in a first step on the narrow sides of the blank part or blank strip a back part (2) comprising a convex contour on the one side and a conical cutting part on the other side are shaped by means of machining, following which in a second step at a substantially room temperature depressions (4) are introduced in some areas in the convex contour of the back part transversally with respect to the longitudinal extension and perpendicularly to the lateral surfaces of the strip over the length thereof through shaping with no chip formation and free expansion of the material, and the non-deformed regions of the back part (2) are used as the elements which give the desired width dimension of the tool or of the cutting line when producing (31) a cutting edge.

12. A production method according to claim 11, **characterised in that** from a planar precursor material a strip-like blank part comprising a bainite microstructure and preferably a decarburised edge zone known per se is produced, according to which in a first step on the narrow sides of the blank part or blank strip a back part (2) preferably comprising a convex contour on the one side and a conical cutting part (3) on the other side are shaped by means of machining, following which in a second step at a substantially room temperature at least on a lateral surface in the region of the back part with an angle to same that is normal with respect to the longitudinal extension of the strip depressions (4) are introduced with no chip formation and free expansion of the material and in this way elevations (23) are formed over the contour of the back part (2) and the elevations (23) protruding in the opposite direction to the cutting region (3) are used as the elements giving the width dimension of the tool or of the cutting line (1) during production of a cutting edge.

13. A production method according to claim 11 or 12, **characterised in that** in a second step depressions are introduced into the contour of the back part (2) in some areas with no chip formation and non-deformed regions are left or protruding regions (23) are formed, wherein in an intermediate step and/or subsequent step the regions left non-deformed or the elevations (23) protruding over the contour (a) are tempered down to a

## Revendications

1. Outil de poinçonnage (1), notamment ligne de coupe (1), formé à partir d'un feuillard d'acier ayant subi au moins partiellement un traitement thermique et/ou un traitement thermique par trempe et revenu, façonné sur les petits côtés avec d'un côté une partie de coupe (3) avec une arête de coupe (31) et de l'autre côté avec une partie de dos (2) avec un profil de section transversale convexe ou un profil constitué de plusieurs zones convexes saillantes (21, 21'), **caractérisé en ce que** le profil présente par endroits, transversalement par rapport à la projection longitudinale et perpendiculairement aux surfaces latérales, des creux (4) façonnés sans enlèvement de copeaux par façonnage à froid ou par estampage avec élargissement libre du matériau, la dimension de l'élargissement (B) étant inférieure à l'épaisseur du feuillard d'acier (D) et les zones non façonnées (a) entre les creux pouvant subir une déformation plastique lors de la mise en service de l'outil.

2. Outil de poinçonnage (1) selon la revendication 1, **caractérisé en ce que** la partie de dos (2) présente au moins au niveau d'une surface latérale du feuillard d'acier avec un angle par rapport à celui-ci des creux (4) façonnés par endroits sans enlèvement de copeaux par façonnage à froid avec élargissement libre du matériau au plan normal par rapport à la projection longitudinale ainsi que des saillies (23) formées par ceux-ci sur le profil de la partie de dos, les zones ou les saillies (23) faisant saillie dans la direction opposée à la zone de coupe pouvant subir une déformation plastique lors de la mise en service de l'outil.

3. Outil de poinçonnage (1) selon la revendication 1, **caractérisé en ce que** les creux (4) au niveau de la partie de dos (2) présentant dans le profil une dimension (t) de 5 à 80 µm, de préférence de 20 à 50 µm.

4. Outil de poinçonnage (1) selon la revendication 1 ou 3, **caractérisé en ce que** la projection longitudinale (b) des creux (4) façonnés par rapport à la projection longitudinale (a) des zones non façonnées sur la partie de dos (2) produit une valeur de 1,0 à 4,9, de préférence de 1,5 à 3,0.

5. Outil de poinçonnage (1) selon une des revendications 1 ainsi que 3 ou 4, **caractérisé en ce que** sur la pièce de dos (2), la distance à la suite entre deux creux (4) ou deux zones non façonnées (a) présente une dimension de 0,1 à 0,95 mm, de préférence de 0,35 à 0,65 mm.

6. Outil de poinçonnage (1) selon une des revendications 1 ainsi que 3 à 5, **caractérisé en ce que** le profil convexe de la partie de dos (2) est formée en section transversale par une ou plusieurs zones arrondies ou polygonales dans la direction longitudinale.

7. Outil de poinçonnage (1) selon la revendication 2, **caractérisé en ce que** les saillies sur le profil de la partie de dos, formées par déformation de la ou des surfaces latérales selon un angle les unes par rapport aux autres, présentent une dimension de 20 à 90 µm et sont écartées d'une longueur de 0,1 à 0,95 mm.

8. Outil de poinçonnage (1), notamment ligne de coupe (1), selon une des revendications 1 à 7, constitué d'un corps de bande en acier faiblement allié avec une zone interne, qui présente une teneur en carbone entre environ 0,3 et environ 0,95 % en poids, **caractérisé en ce que** la structure d'assemblage, obtenue par une transformation dans une zone bainitique inférieure de préférence, a une dureté de 280 à 480 HV et a de préférence au niveau des surfaces latérales une zone de décarburation de bord connue en soi avec une profondeur de 0,01 à 0,05 mm, de préférence de 0,02 à 0,04 mm, les zones non façonnées (a) ou les saillies (23), sur la partie de dos (2) de l'outil de poinçonnage, notamment de la ligne de coupe (1), jusqu'à une profondeur de 95 µm au plus, présentant une structure à motifs formée à un température comprise entre 300 °C et la température de formation d'austénite du matériau.

9. Outil de poinçonnage (1), notamment ligne de coupe (1), selon les revendications 1 à 8, **caractérisé en ce que** la zone de coupe (3) présente une dureté supérieure à 52 HRC ou 550 HV et une arête de coupe arrondie (31) est formée avec un rayon (311) entre 0,004 et 0,05 mm.

10. Outil de poinçonnage (1), notamment ligne de coupe (1) selon la revendication 9, **caractérisé en ce que** l'arête de coupe présente un angle de surface de coupe de 50 à 100° et **en ce que**, au choix, au moins une surface latérale est réalisée vers l'arête de coupe (3) avec une facette principale et une facette secondaire.

11. Procédé de fabrication pour un outil de poinçonnage (1), notamment pour une ligne de coupe (1), formé à partir d'un feuillard d'acier ayant subi au moins partiellement un traitement thermique et/ou un traitement thermique par trempe et revenu, façonné sur les petits côtés avec d'un côté une partie de coupe (3) avec une arête de coupe (31) et de l'autre côté avec une partie de dos (2) avec un profil de section transversale convexe ou un profil constitué de plusieurs zones convexes saillantes (21, 21'), **caractérisé en ce qu'**une ébauche en forme de bande en une matière première plate est fabriquée avec une structure d'assemblage bainitique et de préférence avec une zone de bord décarburée connue en soi, après quoi, lors d'une première étape, sur les petits côté de l'ébauche ou de la bande brute, par usinage par enlèvement de copeaux, d'un côté une partie de dos (2) avec un profil convexe et de l'autre côté une partie de coupe conique sont façonnées, après quoi, dans une deuxième étape, à température généralement ambiante, transversalement à la projection longitudinale et perpendiculairement aux surfaces latérales de la bande sur sa longueur dans le profil convexe de la partie de dos, des creux (4) sont par endroits façonnés sans enlèvement de copeaux par élargissement libre du matériau et les zones non façonnées de la partie de dos (2) sont utilisées comme éléments fournissant la dimension de largeur souhaitée de l'outil ou de la ligne de coupe par fabrication d'arêtes de coupe (31).

12. Procédé de fabrication selon la revendication 11, **caractérisé en ce qu'**une ébauche en forme de bande constituée d'une matière première plate est fabriquée avec une structure d'assemblage bainitique et de préférence avec une zone de bord décarburée connue en soi, après quoi, dans une première étape, sur les petits côtés de l'ébauche ou de la bande brute, par usinage par enlèvement de copeaux, d'un côté une partie de dos (2), de préférence avec un profil convexe et de l'autre côté une partie de coupe conique (3) sont façonnées, après quoi, dans une deuxième étape, à température généralement ambiante, des creux (4) sont façonnés au moins sur une surface latérale dans la zone de la partie de dos selon un angle par rapport à celle-ci de façon normale à la projection longitudinale de la bande par façonnement sans enlèvement de copeaux par élargissement libre du matériau et ainsi des saillies (23) sont formées sur le profil de la partie de dos (2) et les saillies (23) en saillie dans la direction opposée à la zone de coupe (3) sont utilisées comme éléments donnant la dimension de largeur de l'outil ou de la ligne de coupe (1) lors d'une fabrication d'arêtes de coupe.

13. Procédé de fabrication selon la revendication 11 ou **12,caractérisé en ce que,** dans une deuxième étape, des creux sont façonnés par endroits dans le profil de la partie de dos (2) sans enlèvement de copeaux et des zones non façonnées sont laissées ou des saillies saillantes (23) sont formées, dans une étape intermédiaire et/ou une étape ultérieure, les zones ou saillies (23) laissées non façonnées ou en saillie sur le profil (a) sont laissées jusqu'à une profondeur de celle-ci de 95 µm au plus à une température comprise entre 300 °C et la température de formation d'austénite de l'alliage.
